# EUROPEAN PATENT SPECIFICATION

(11) **EP 1 230 761 B1**
(45) Date of publication and mention of the grant of the patent: **19.10.2005**
(21) Application number: 00978168.3
(22) Date of filing: 14.11.2000
(51) Int. Cl.: H04L 12/28, H04L 12/66, H04L 12/64, H04M 7/00

(54) **ACCELERATION DEPENDENT CHANNEL SWITCHING IN MOBILE TELECOMMUNICATIONS**
BESCHLEUNIGUNGSABHÄNGIGE KANALUMSCHALTUNG IN MOBILEN TELEKOMMUNIKATIONSNETZEN
COMMUTATION DE VOIES DEPENDANTE DE L'ACCELERATION POUR TELECOMMUNICATIONS MOBILES

(30) Priority: 17.11.1999 US 441883
(43) Date of publication of application: 14.08.2002
(73) Proprietor: TELEFONAKTIEBOLAGET LM ERICSSON (publ), 164 83 Stockholm (SE)
(72) Inventor: ANDERSSON, Christoffer, San Francisco, CA 94107 (US); JOHANSSON, Staffan, S-974 55 Lulea (SE)
(74) Representative: Forsberg, Ulrika S.
(86) International application number: PCT/SE2000/002240
(87) International publication number: WO 2001/037587

(56) References cited:
- US-A- 5 610 910
- BHAGWAT P ET AL: "USING CHANNEL STATE DEPENDENT PACKET SCHEDULING TO IMPROVE TCP THROUPUT OVER WIRELESS LANS" WIRELESS NETWORKS,US,ACM, vol. 3, no. 1, 1 March 1997 (1997-03-01), pages 91-102, XP000688204 ISSN: 1022-0038
- COBB J A ET AL: "CONGESTION OR CORRUPTION? A STRATEGY FOR EFFICIENT WIRELESS TCP SESSIONS" PROCEEDINGS IEEE SYMPOSIUM ON COMPUTERS AND COMMUNICATIONS, 1 January 1995 (1995-01-01), XP000568953

## Description

### BACKGROUND

### 1. FIELD OF THE INVENTION

The present invention pertains to mobile telecommunications, and particularly to changing of channels for the transmission of packet switched data.

### 2. RELATED ART AND OTHER CONSIDERATIONS

Initially commercial mobile or cellular telecommunications systems were primarily employed for voice calls, e.g., circuit switched connections. In more recent years, however, cellular telecommunications systems have also been employed for the transmission of data (packet switched data), with the user equipment taking forms other than a mobile telephone. For example, user equipment such mobile laptops can send data over wireless links and through a cellular telecommunications system to wired computer networks such as the internet.

Cellular telecommunications systems employ a wireless link (e.g., air interface) between the (mobile) user equipment unit and a base station (BS). The base station has transmitters and receivers for radio connections with numerous user equipment units. One or more base stations are connected to (e.g., by landlines or microwave) and managed by a radio network controller (RNC) [also known in some networks as a base station controller (BSC)]. The radio network controller is, in turn, connected through control nodes to a core telecommunications network.

Control nodes can take various forms, depending on the types of services or networks to which the control nodes are connected. For connecting to connection-oriented, circuit switched networks such as PSTN and/or ISDN, the control node can be a mobile switching center (MSC). For connecting to packet switched data services such as the Internet (for example), the control node can be a gateway data support node through which connection is made to the wired data networks, and perhaps one or more serving nodes. Examples of a particular packet data service called the General Packet Radio Service (GPRS) [provided in Europe in the context of the Global System for Mobile communications (GSM)] are provided by the following: Patent Application WO 9 957 925 filed April 30, 1998 entitled "Dynamic Allocation of Packet Data Channels"; Patent Application WO 9 957 924 filed April 30, 1998 entitled "Allocation of Channels for Packet Data Services"; and Patent Application WO 9 859 505 filed June 4, 1998 entitled "Data Packet Radio Service With Enhanced Mobility Management".

Third generation mobile telecommunications systems typically employ both common channels and dedicated channels. The common channels are shared between several users; a dedicated channel is allocated to only one user at a time. Common channels can include common control channels (examples of which are connection request channels (RACH) and network broadcast channels (BPCH)) and common traffic channels. In a wideband code division multiple access (W-CDMA) mobile telecommunications system, the common channels have open loop power control as well as low throughput, but the dedicated channels have closed loop power control (thereby enabling high throughput).

US 5 673 259 discloses a system and a method in which switching between a common channel and a dedicated channel is determined according to bandwidth demand.

As indicated above, packet switched data services can include Internet service. In terms of Internet connection, the transmission control protocol/Internet protocol (TCP/IP) has gained wide acceptance. Although usually functioning together, the internet protocol (IP) and transmission control protocol (TCP) are actually separate protocols, with the TCP being on a higher level (transport level) than the IP (on the network level).

There are numerous implementations of TCP, each with differing characteristics, the Arena implementation perhaps being the most common. In general, TCP supports a wide range of upper-layer protocols (ULPs). A ULP can send continuous streams of data through TCP. The TCP breaks the streams into encapsulated segments, each segment including appropriate addressing and control information. TCP passes the segments to the network layer (e.g., the IP).

The IP layer encloses the TCP segments in IP packets or Internet datagrams. It is the Internet datagram that enables routing to source and destination TCPs in other networks. Thus, the IP serves, e.g., to assemble IP datagrams and enable routing of the IP datagrams between IP addresses (e.g., between hosts) which are included in the IP datagram header.

TCP provides reliability which the IP lacks. In particular, the TCP carries out segmentation and reassembly functions of a datagram to match frame sizes and data-link layer protocols. In addition, TCP performs additional functions, such as addressing within a host, retransmission of lost packets, and flow control. General concepts undergirding TCP/IP are understood from numerous publications, including Freeman, *Telecommunication System Engineering,* Third Edition, John Wiley & Sons, Inc., (1996) and W.R. Stevens, *TCP*/*IP Illustrated, Volume I: The Protocols* (Addison-Wesley, 1994).

Since TCP was designed to work well on the Internet, TCP is very careful to avoid congestion of packets. That is, TCP seeks to avoid putting more packets on a link than the network can handle, lest packet loss result in the network. To this end, upon initiation of a session TCP starts at a specified packet sending rate, and then (in what is termed a "slow start" phase) quickly (e.g., exponentially) increases the packet sending rate so as to test what rate the link can accommodate. In view of such quick increase in packet sending rate, TCP is cited herein as one example of a fast transmission-ramping protocol. But, when (e.g., in the slow start phase) it occurs that a small number of packets are lost or largely delayed, TCP either halves its packet sending rate or cuts its packet sending rate to zero (depending on the implementation). Yet TCP is still concerned with achieving maximum possible bandwidth, and therefore after such reduction in packet sending rate TCP employs a cautious technique to raise the throughput again. The cautious technique can be, for example, a linear (rather than exponential) increase in the packet sending rate which occurs in what is termed a "congestion avoidance" phase.

Thus, TCP views packet loss as a sign of congestion. Packet loss is typically more prone on common traffic channels where there is sharing of small bandwidth and, on average, delay is greater. To deal with the perceived congestion indicated by packet loss, TCP reduces packet sending rate, which causes a huge decrease in packet throughput.

What is needed therefore, and an object of the present invention, is a technique for balancing the considerations of packet reception and throughput in a mobile telecommunications system wherein packet switched data includes TCP packets.

### BRIEF SUMMARY OF THE INVENTION

A mobile telecommunications system comprises at least one node through which a packet switched data session is established between a user equipment unit and a data network. In order to maintain a high packet throughput rate, the node ascertains whether the session has a quickly accelerating high packet transmission rate. If so, the node has the option to switch channels or channel types for the session in accordance with the determination, e.g., to switch the session from a common traffic channel to a dedicated traffic channel or from a dedicated traffic channel having a first transmission rate to a dedicated traffic channel having a second transmission rate. Switching to a dedicated traffic channel or a higher rate dedicated traffic channel provides a greater opportunity for the session to continue at a high packet transmission rate with less likelihood of packet loss. The node makes its determination that the session involves fast transmission-ramping protocol packets at an early stage of the session.

By detecting a quickly accelerating high packet transmission rate, the invention can ascertain utilization of a fast transmission-ramping protocol, such as transmission control protocol (TCP), for example. In an illustrated embodiment of the invention, a session is suspected of being a fast transmission-ramping protocol when its transmission rate appears to be in a slow start phase.

Various techniques can be employed for detecting whether a session has a fast transmission-ramping protocol. For example, a signature of a fast transmission-ramping protocol can be a predetermined pattern of interval time lengths between receipt times of packets. In particular, a sequence of long-short-long-short intervals or gaps between packet receipt times occurs for TCP, and upon detection is indicative of the existence of the fast transmission-ramping protocol. According to another example technique, the invention determines when throughput of the packets reaches a packet speed threshold at an early stage of the session, and then compares a derivative of the packet transmission rate at the packet speed threshold with a predetermined acceleration threshold. If the derivative of the packet transmission rate at the packet speed threshold equals or exceeds the predetermined acceleration threshold, it is concluded that the session utilizes a fast transmission-ramping protocol (e.g., TCP).

In the illustrated embodiment, the node is a radio network controller node of a wideband code division multiple access telecommunications network.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1 is a schematic view of an embodiment of a telecommunications system which utilizes the present invention.
Fig. 2 is a diagrammatic view of functionalities provided in a mobile user equipment unit which participates in the telecommunications system of Fig. 1.
Fig. 3 is a schematic view of hardware components included in the mobile user equipment unit of Fig. 2.
Fig. 4 is a schematic view of a radio network controller (RNC) node in accordance with an embodiment of the invention.
Fig. 4A is a schematic view of a packet input/output unit according to one embodiment of the invention for inclusion in the radio network controller (RNC) node of Fig. 4.
Fig. 4B is a schematic view of a packet input/output unit according to another embodiment of the invention for inclusion in the radio network controller (RNC) node of Fig. 4.
Fig. 5 is a schematic view of a base station (BS) node in accordance with an embodiment of the invention.
Fig. 6 is a flowchart showing general steps executed by the node of Fig. 4 in connection with a channel type switching operation.
Fig. 6A and Fig. 6B are flowcharts showing alternate techniques of performing a classification step of the channel type switching operation of Fig. 6.
Fig. 7 is a graph contrasting a slow start phase of a session with a collision avoidance phase of a session.
Fig. 8 is a graph showing data packet transmission throughput over time for a TCP session with attendant throughput decrease occasioned by packet loss.
Fig. 9A and Fig. 9B are graphs illustrating a technique for classifying data packet sessions.

### DETAILED DESCRIPTION OF THE DRAWINGS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

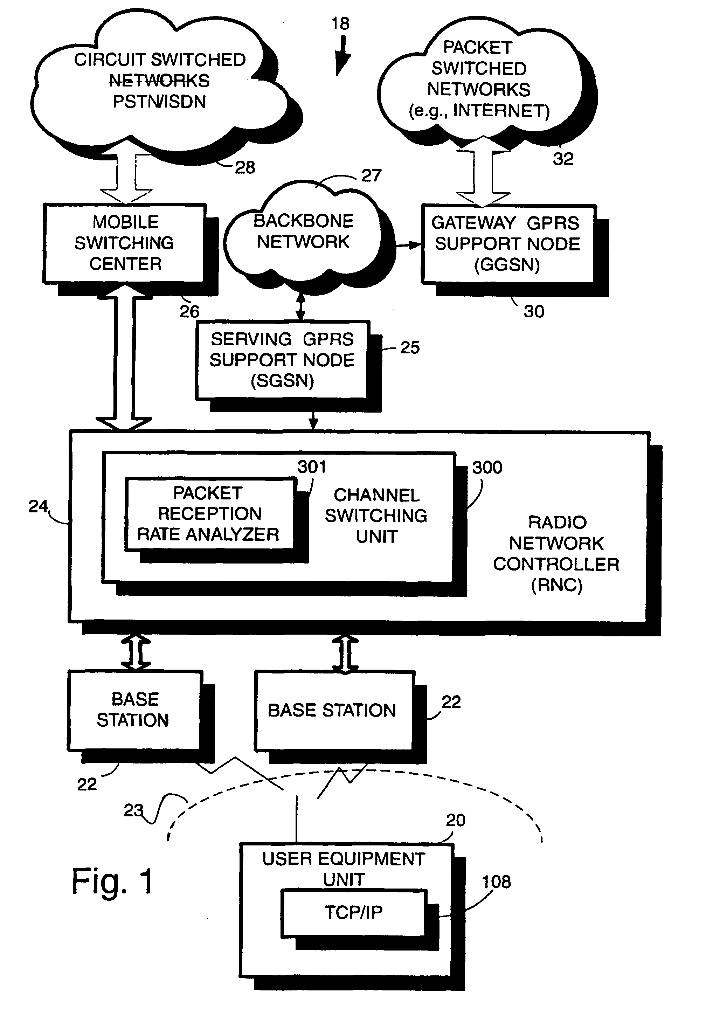

Fig. 1 shows a telecommunications network 18 in which a user equipment unit 20 communicates with one or more base stations 22 over air interface (e.g., radio interface) 23. Base stations 22 are connected by terrestrial lines (or microwave) to radio network controller (RNC) 24 [also known as a base station controller (BSC) in some networks]. The radio network controller (RNC) 24 is, in turn, connected through a control node known as the mobile switching center 26 to circuit-switched telephone networks (PSTN/ISDN) represented by cloud 28. In addition, radio network controller (RNC) 24 is connected to Serving GPRS Support Node (SGSN) 25 and through backbone network 27 to a Gateway GRPS support node (GGSN) 30, through which connection is made with packet-switched networks (e.g., the Internet, X.25 extemal networks) represented by cloud 32.

Gateway GRPS support node (GGSN) 30 provides the interface towards the external IP packet networks and X.25 networks. Gateway GRPS support node (GGSN) 30 translates data formats, signaling protocols and address information in order to permit communication between the different networks. Backbone network 27 is an Internet Protocol (IP) network. Serving GPRS Support Node (SGSN) 25 provides packet routing to an from a SGSN service area, and serves GPRS subscribers which are physically located within the SGSN service area. Serving GPRS Support Node (SGSN) 25 provides functions such as authentication, ciphering, mobility management, charging data, and logical link management toward the user equipment unit. A GPRS subscriber may be served by any SGSN in the network depending on location. The GPRS traffic is routed from the Serving GPRS Support Node (SGSN) 25 to base station controller (BSC) 24 and via base station (BS) 22 to user equipment unit 20. The functionality of Serving GPRS Support Node (SGSN) 25 and Gateway GRPS support node (GGSN) 30 may be combined in the same node, or may exist in separate nodes as shown in Fig. 1.

As understood by those skilled in the art, when user equipment unit 20 is participating in a mobile telephonic connection, signaling information and frames of user information from user equipment unit 20 are transmitted over air interface 23 on designated radio channels to one or more of the base stations 22. The base stations have radio transceivers which transmit and receive radio signals involved in the connection or session. For information on the uplink from the user equipment unit 20 toward the other party involved in the connection, the base stations convert the radio-acquired information to digital signals which are forwarded to radio network controller (RNC) 24. The radio network controller (RNC) 24 orchestrates participation of the plural base stations 22 which may be involved in the connection or session, since user equipment unit 20 may be geographically moving and handover may be occurring relative to the base stations 22. On the uplink, radio network controller (RNC) 24 picks frames of user information from one or more base stations 22 to yield a connection between user equipment unit 20 and the other party, whether that party be in PSTN/IDSN 28 or on the packet-switched networks (e.g., the Internet) 32.

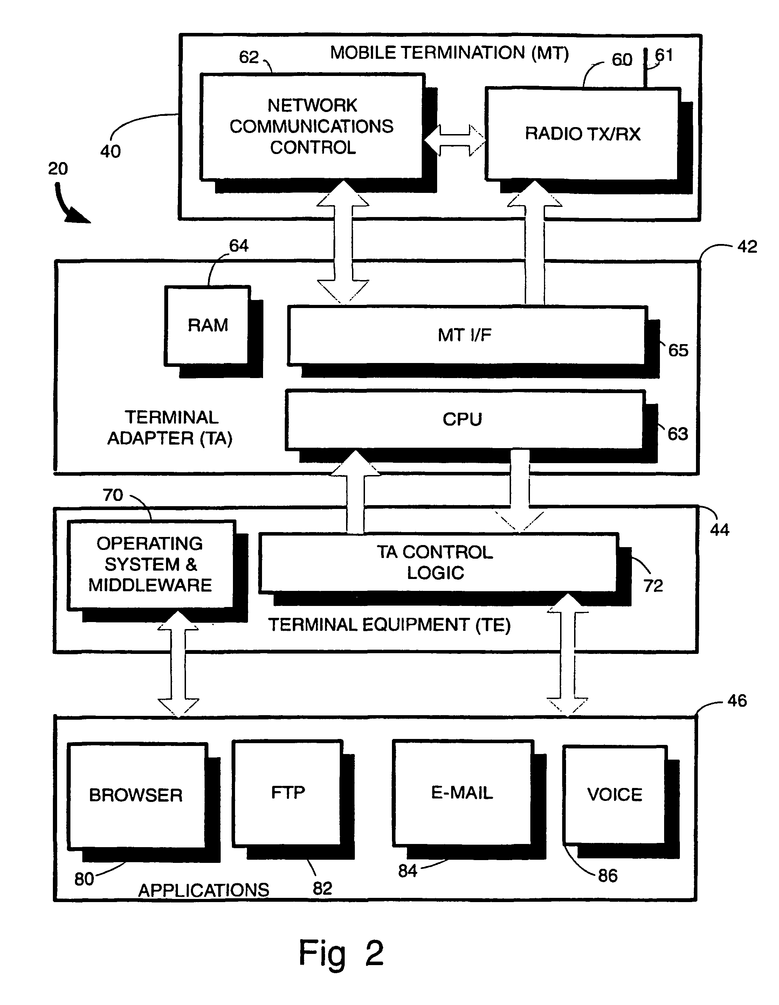

One type of a user equipment unit 20 with which the present invention is particularly useful is a computer with mobile termination, such as a laptop computer, for example. An illustrative embodiment of a suitable user equipment unit 20 for the present invention is provided in Fig. 2. As shown in Fig. 2, user equipment unit 20 has the following functional entities pertinent to the present invention: mobile termination entity (MT) 40; terminal adapter (TA) 42; terminal equipment 44; and a set 46 of applications. While each of these entities are described below, it should be understood that the invention is not confined to user equipment units having the same physical separation between functional entities, and that the present invention can be implemented in other than the described functional configuration.

Mobile termination entity (MT) 40, which is sometimes called the Mobile Equipment (ME), contains the radio transmitter/receiver TX/RX 60 (with antenna 61) and communications control 62 toward the network 18, e.g., the setup and release of radio connections, handover, etc. Mobile termination entity (MT) 40 can be a standard mobile pocket telephone (e.g., a GSM phone) or a phone card within user equipment unit 20.

Terminal adapter (TA) 42 acts as an adaptation between mobile termination entity (MT) 40 and the applications in the set 46 of applications. The terminal adapter (TA) 42 is typically realized as a Modem implemented on a PCMCIA (Personal Computer Memory Card International Association) card, which is inserted in a slot of terminal equipment 44. The terminal adapter (TA) 42 has a CPU 63 as well as a RAM 64 and a MT interface (I/F) 65.

Terminal equipment 44 is normally a small computer (or computer platform), and as such includes both hardware and software. Terminal equipment 44 thus has typical aspects of a computer platform, e.g., a processor an operating system and middleware (Internet protocol suits, for example), collectively illustrated by reference numeral 70 in Fig. 2. In addition, terminal equipment 44 has control logic 72 (executed by the processor) for controlling terminal adapter (TA) 42. Control logic 72 performs set-up and release of calls to and from the network 18.

As shown in Fig. 2, the set 46 of applications illustrated for the example embodiment includes an Internet browser 80; a file transfer program (FTP) 82; an E-mail program 84; and voice service 86.

Each application in set 46 is normally a program which is executed by the processor of terminal equipment 44 and which interacts with the user via, e.g., data input devices such as a keyboard and/or mouse and output or display devices. These applications typically can run on any personal computer (with or without radio access). The applications in set 46 use a number of application programming interfaces (APIs) towards the terminal equipment 44. One or several of these APIs is for communications with the network 18. Examples of APIs are Unix BSD Socket, WinSock or more telcom-specific APIs such as the Microsoft Intel Telephony API, AT&T, and Novell TSAPI or OnTheMove Mobile API. Thus, although the set 46 of applications is represented in Fig. 2 as an entity separate from terminal equipment 44, it should be understood that the set 46 of applications executed on the terminal equipment 44 if the terminal equipment 44 is a general computer, with the applications that are executed using the APIs offered by terminal equipment 44.

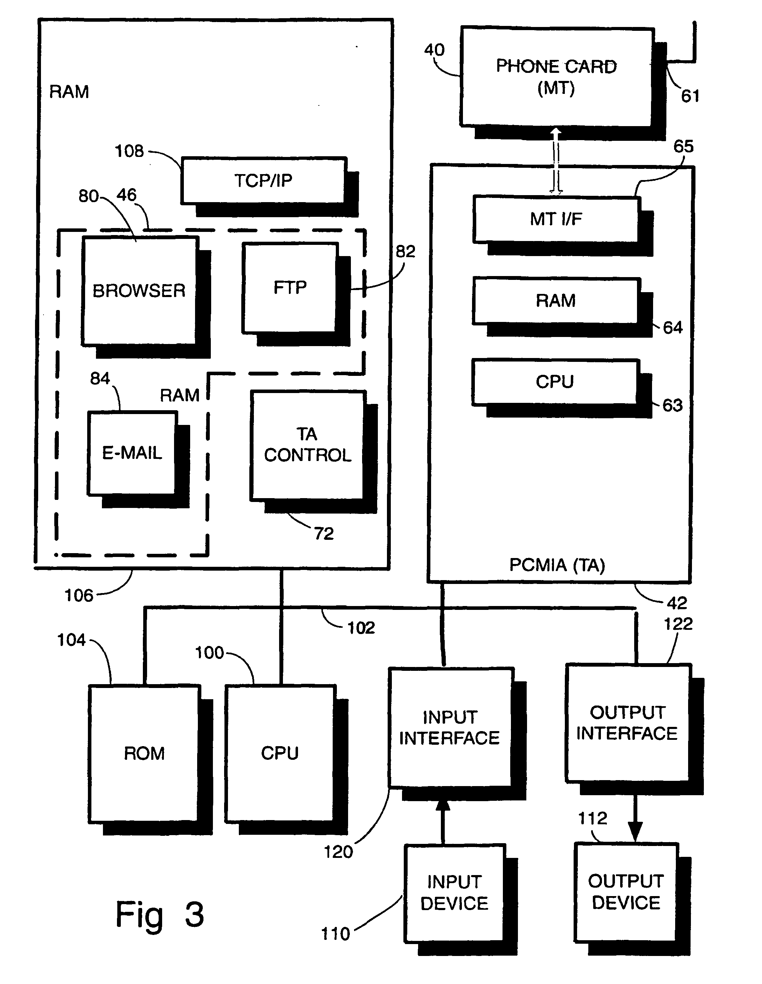

Fig. 3 shows how the functional entities of mobile station as illustrated in Fig. 2 are mapped onto hardware components of mobile station 20. In essence, Fig. 3 shows terminal equipment 44 wherein mobile termination entity (MT) 40 and terminal adapter (TA) 42 are cards situated in card slots. Terminal adapter (TA) 42 is connected to central processing unit (CPU) 100 by bus 102. Mobile termination entity (MT) is connected to MT interface 65 of terminal adapter (TA) 42 by a cable.

Memories of terminal equipment 44, particularly read only memory (ROM) 104 and random access memory (RAM) 106 are also connected to central processing unit (CPU) 100 by bus 102. In RAM 106 are stored the TA control logic 72, the set 46 of applications, and TCP/IP stack 108.

Terminal equipment 44 interfaces with a user through input device(s) 110 and output device(s) 112, each connected through respective appropriate interfaces 120 and 122 to bus 102. Input device(s) 110 can be a keyboard and/or mouse, for example, while output device(s) 112 can take the form of a display device, such as a LCD display panel, for example.

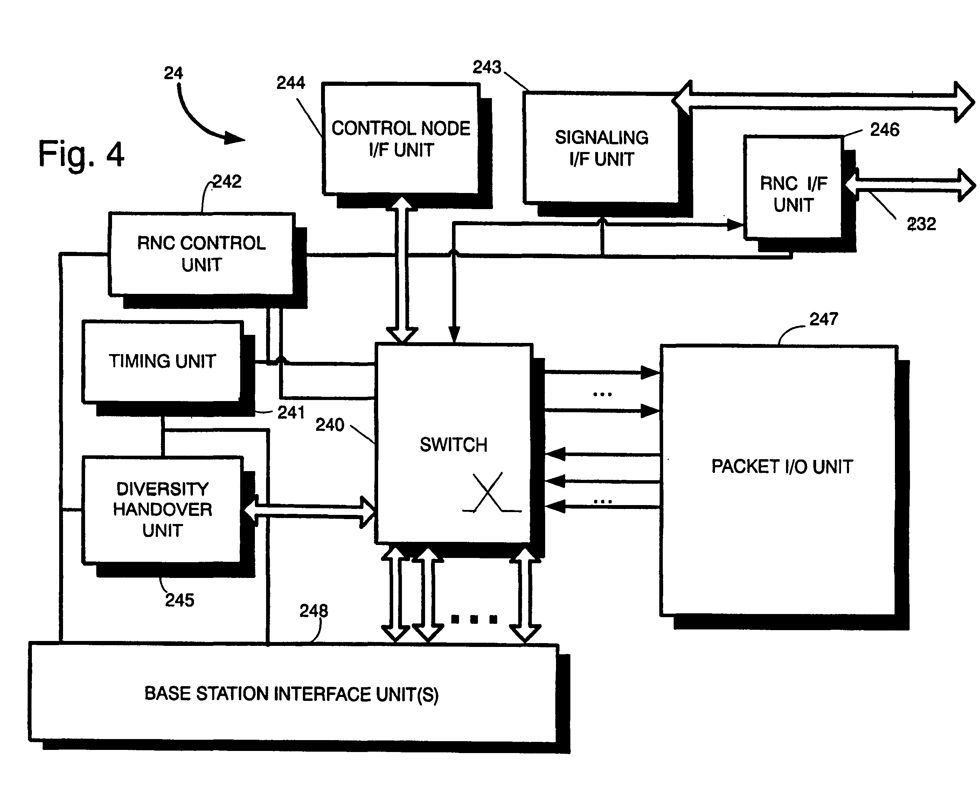

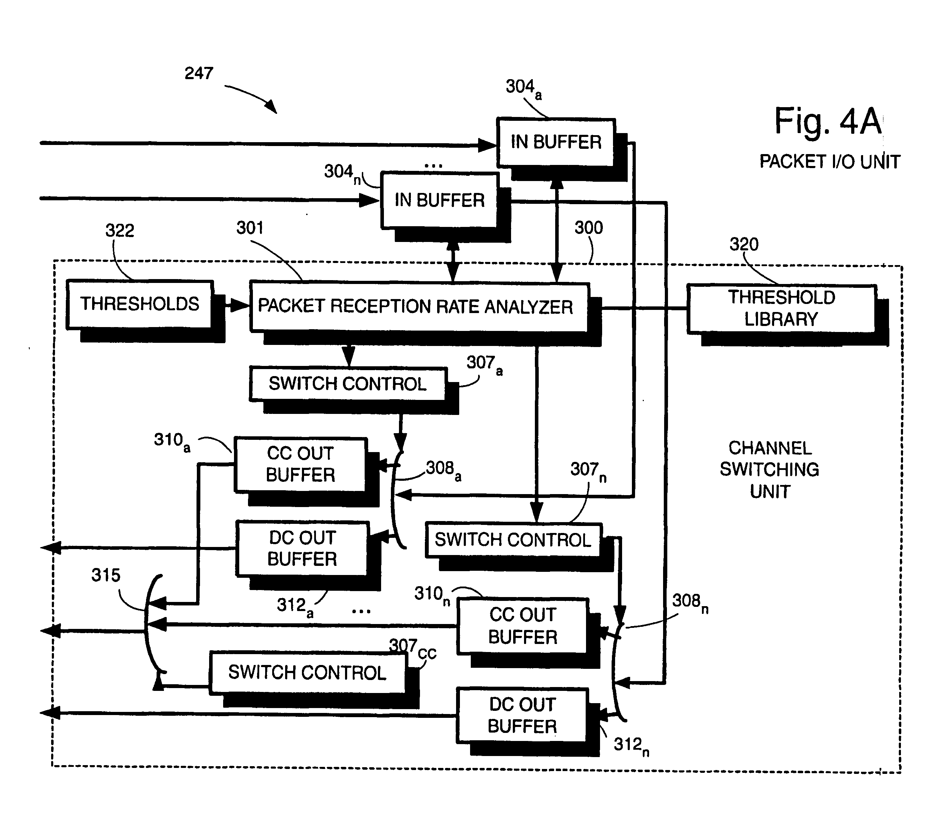

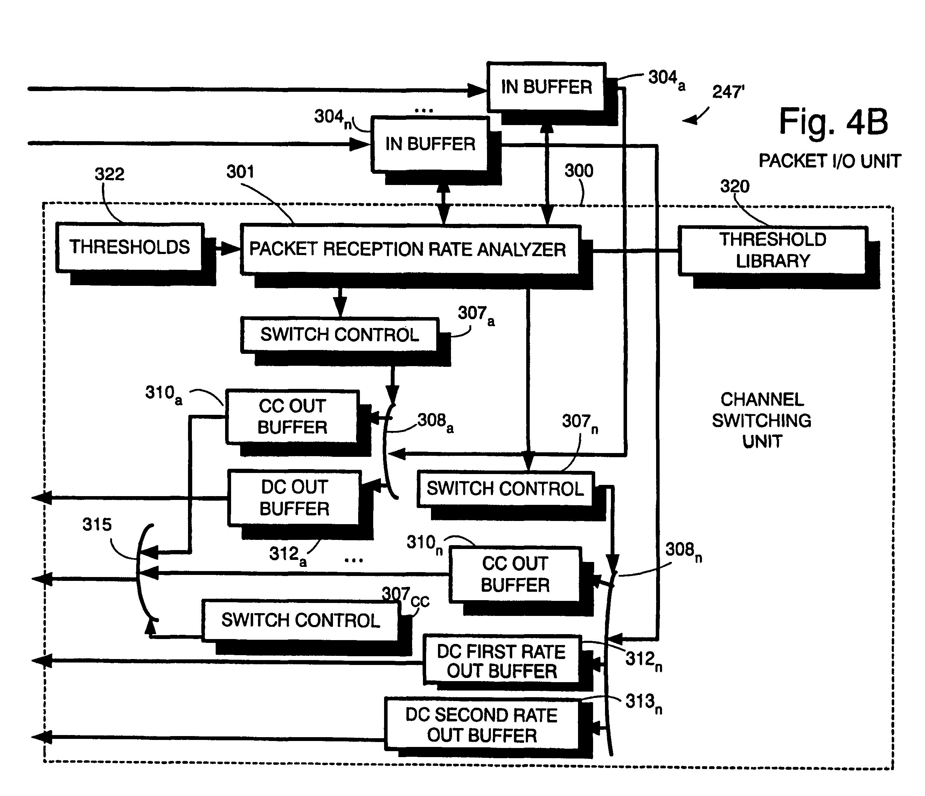

Further details of an example radio network controller (RNC) 24 are shown in Fig. 4 as comprising a switch 240. Switch 240, which is controlled by RNC control unit 242, has a plurality of ports which are connected to various units and interfaces of radio network controller (RNC) 24. The RNC control unit 242 is connected to each element of radio network controller (RNC) 24, including timing unit 241; diversity handover unit (DHU) 245; and input/output unit 247. The radio network controller (RNC) 24 is connected to a signaling network via a signaling interface 243. The interfaces connected to ports of switch 240 include service node interface unit 244; RNC I/F unit 246; and base station interface units 248. The service node interface unit 244 is connected to the appropriate mobile switching center 26 and GRPS control node 30. RNC interface unit 246 is connected by inter-RNC transport link 232 to other (unillustrated) radio network controllers (RNCs) 24. Base station interface units 248 are connected to the base stations (BS) 22 served by radio network controller (RNC) 24. The input/output unit 247 and is connected to appropriate core ports of switch 240.

In general, traffic data packets entering radio network controller (RNC) 24 are buffered or queued in the input/output unit 247 with respect to active sessions, and from input/output unit 247 are sent back to the switch 240 for routing out of radio network controller (RNC) 24 on the respective channels assigned to the active sessions. Traffic data packets are thus buffered in input/output unit 247 regardless of whether the data packets are TCP/IP packets. Traffic data packets in route through radio network controller (RNC) 24 from user equipment unit 20 to packet switched networks 32 are queued in input/output unit 247, as well as traffic data packets transmitted through radio network controller (RNC) 24 from packet switched networks 32 to user equipment unit 20.

As shown in more detail in Fig. 4A, the input/output unit 247 includes a channel switching unit 300 and a processor herein known as packet reception rate analyzer 301. ATM cells from switch 240 are applied to an appropriate one of plural buffers 304ₐ - 304ₙ in input/output unit 247. Buffer 304ₐ is employed for a first active session; buffer 304ₙ is employed for an n^{th} active session, it being understood from Fig. 4A that unillustrated buffers a+1 through n-1 are also provided for respective sessions a+1 through n-1. The packet reception rate analyzer 301 is connected to analyze the rate of reception of data packets in each of in buffers 304, and to apply switch control information to a corresponding one of switch control units 307ₐ - 307ₙ. The switch control units 307ₐ - 307ₙ control demuliplexing of data packets (via respective demultiplexers 308) out of buffers 304. Multiplexers 308 are controlled by switch control units 307 for applying data packets either to respective common channel output buffers 310 or to respective dedicated channel output buffers 312. Thus the switch control units 307ₓ control multiplexers 308ₓ (x = a,... n) for routing of data packets to one of common channel output buffer 310, or to dedicated channel output buffer 312ₓ. The buffers 304 and 310, 312 are FIFO buffers. The outputs of buffers 312ₓ being applied to switch 240. The outputs of buffers 310ₓ are applied to inputs of demultiplexer 315. Under supervision of switch control 307_{cc} the demultiplexer 315 routes data packets onto a common port of switch 240. Thus, the packet reception rate analyzer 301, the switch control units 307, multiplexers 308, demultiplexer 315, and the buffers 310 and 312 comprise the channel switching unit 300. In channel switching unit 300, the packet reception rate analyzer 301 and the various switch controls operate under supervision of an unillustrated master controller which, e.g., sequences and coordinates operation.

The packet reception rate analyzer 301 has access to various pertinent data items for performing its operations. In this regard, Fig. 4A shows packet reception rate analyzer 301 has being connected to threshold library 320 and a memory 322 for storing threshold values. Although memories 320 and 322 are shown as distinct memories in Fig. 4A, it should be understood that the values can be stored in the same memory, or even internally stored within packet reception rate analyzer 301.

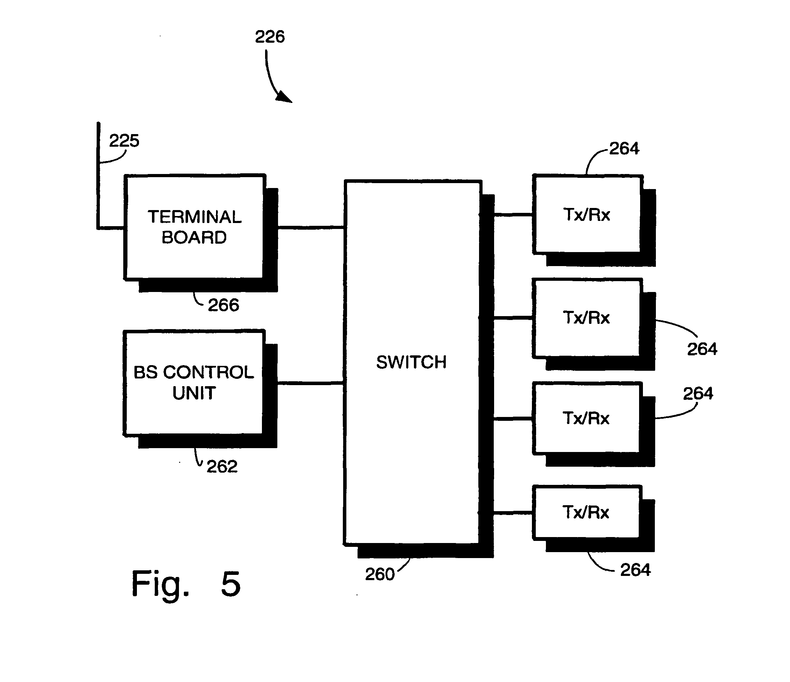

An example base station (BS) 22 is shown in Fig. 5 as comprising a switch 260. Switch 260, which is controlled by base station control unit 262, has a plurality of ports. At least one, and typically several, of the ports of switch 260 are connected to respective transceiver (Tx/Rx) boards 264. Transceiver (Tx/Rx) boards 264 are connected to antennae which are located in the cell served by the base station (BS) 22. Control unit 262 is also connected to ports of switch 260, as is an terminal board 266. It is through terminal board 266 that base station (BS) 22 communications with its radio network controller (RNC) 24, with link 225 being connected between an appropriate base station interface unit 248 of radio network controller (RNC) 24 (see Fig. 4) and terminal board 266.

The particular example embodiments of radio network controller (RNC) 24 shown in Fig. 4 and base station (BS) 22 shown in Fig. 5 happen to be ATM-based nodes. In this regard, both switch 240 of radio network controller (RNC) 24 and switch 260 of base station (BS) 22 are, in the illustrated example embodiments, ATM switches through which ATM cells are directed. Further information regarding an example ATM switch is provided by United States Patent Application Serial No. 08/188,101, entitled "Asynchronous Transfer Mode Switch", filed November 9, 1998, which is incorporated herein by reference. Further information regarding devices connected to ports of an example ATM switch is provided by United States Patent Application Serial No. 09/188,097, entitled "Centralized Queuing For ATM Node", filed November 9, 1998, which is also incorporated herein by reference. However, it should be understood that the present invention is not limited to the particular architectures of the example radio network controller (RNC) 24 and base station (BS) 22 shown, nor the use of ATM switches, but that other architectures and data transfer techniques can be employed within the scope and spirit of the present invention.

The particular example embodiments of radio network controller (RNC) 24 shown in Fig. 4 and base station (BS) 22 shown in Fig. 5 also happen to be nodes for a wideband code division multiple access (W-CDMA) telecommunications network. In W-CDMA , the information transmitted between a base station and a particular mobile station is modulated by a mathematical code (such as channelizing and scrambling codes) to distinguish it from information for other mobile stations which are utilizing the same radio frequency. In addition, in CDMA mobile communications, on the downlink typically the same baseband signal with suitable codes is sent from several base stations with overlapping coverage. Thus, in CDMA, the individual radio links are discriminated on the basis of codes. On the uplink, user data sent in frames from the mobile station for the mobile connection is received in multiple base stations. This utilization of radio channels between multiple base stations and a mobile station in a CDMA scheme, as summarized above, is termed "soft handover." Various aspects of CDMA are set forth in Garg, Vijay K. et al., *Applications of CDMA in Wireless*/*Personal Communications,* Prentice Hall (1997). However, it should be understood that the context of a W-CDMA telecommunications network is merely illustrative, and that the invention can be utilized in other types of telecommunications network as well, such as TDMA and FDMA, for example.

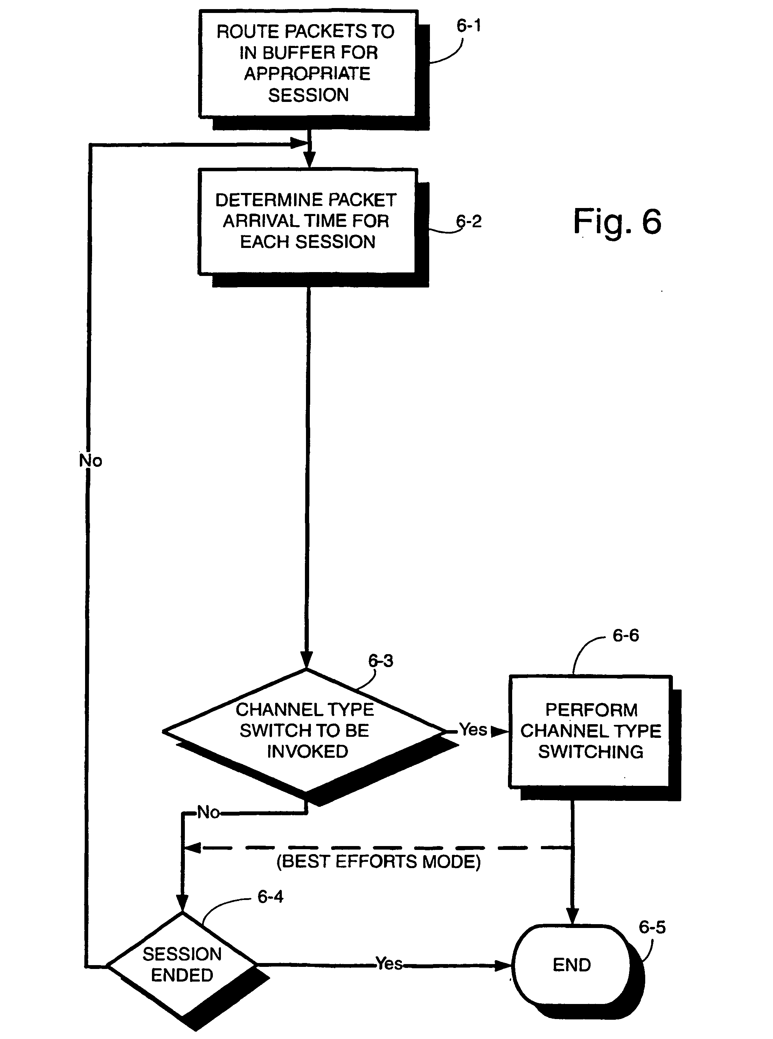

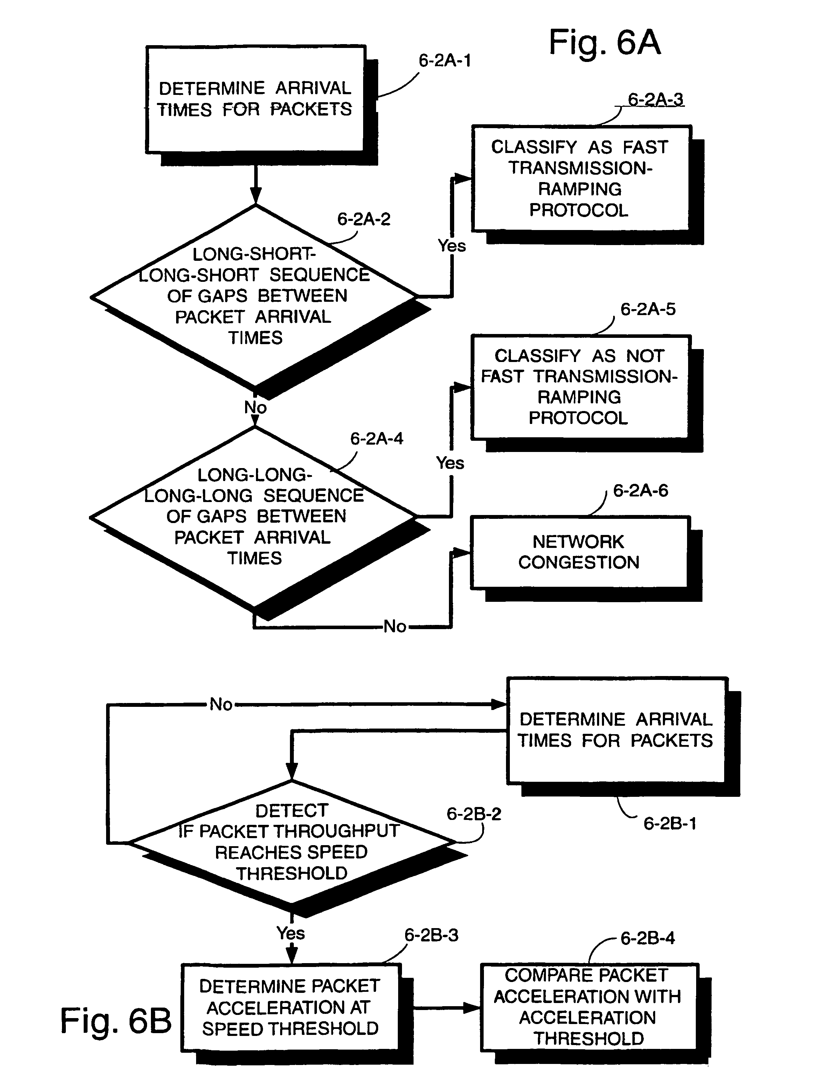

In operation, it is assumed that user equipment unit 20 has just begun a data packet transaction session, and that session at least initially utilizes a common traffic channel. In radio network controller (RNC) 24, all data packets are routed through switch 240 to input/output unit 247 using conventional routing techniques. Routing of traffic data packets to input/output unit 247 of radio network controller (RNC) 24 occurs regardless of whether the data packets are being transmitted on the downlink (from the packet switched networks 32 to user equipment unit 20) or on the uplink (from user equipment unit 20 to the packet switched networks 32). The operation of one example mode of input/output unit 247 is now described in connection with Fig. 6 in the context of handling of both TCP data packets and non-TCP data packets. The following discussion is generic with regard to both uplink and downlink data packet tranmission.

As depicted by step 6-1, switch 240 routes the traffic data packets to an appropriate one of the in buffers 304 in input/output unit 247, i.e., the particular in buffer 304 which is handling the session for the user equipment unit 20. The packet reception rate analyzer 301 monitors the filling of data packets in the in buffers 304 for each session and determines a packet arrival time for data packets for each session at step 6-2.

Based on recent packet arrival times noted at step 6-2, packet reception rate analyzer 301 classifies the data packets comprising the session as being fast transmission-ramping protocol (e.g., TCP) packets or not. The packet reception rate analyzer 301 can perform this classification using any of several techniques, two of which are subsequently described with respect to Fig. 6A and Fig. 6B. If the packet reception rate analyzer 301 determines that from its slow start characteristic a session likely involves a fast transmission-ramping protocol, the packet reception rate analyzer 301 sends a signal to the appropriate switch control 307 for that session. For example, if the session having data packets filling in buffer 304ₐ is determined by packet reception rate analyzer 301 to be a TCP session, the packet reception rate analyzer 301 packet reception rate analyzer 301 accordingly notifies switch control unit 307ₐ.

Recall that at the outset the data packet session was allocated a common traffic channel. When a common traffic channel is utilized for the data packet session, the data packets output from the in buffer 304 for the session are routed via multiplexer 308 to a common channel out buffer 310 for the particular common channel being utilized for the data packet session, and from common channel output buffer via demultiplexer 315 to a common port of switch 240.

At step 6-3 the switch control unit 307 for a session ascertains whether it is desirable, with respect to the session which it handles, now to change or switch the channel for the data packets. The determination of step 6-3 can involve changing or switching the data packets from a common traffic channel to a dedicated traffic channel, or even from a first rate dedicated traffic channel to a second rate dedicated traffic channel. Several factors can be involved in the determination of step 6-3. A primary factor in the determination of step 6-3 is the classification by packet reception rate analyzer 301 of the data packets of the session as described above in connection with step 6-2. Secondary factors can include, for example, whether any additional dedicated traffic channels are available and the load on the common channel. In addition, the priority of the subscriber owning the user equipment unit 20 may be considered, as the subscription agreement with the subscriber may entitle the subscriber to preferential handling for such channel type switching.

If it is determined at step 6-3 that a channel type switch is not to be invoked, it is determined at step 6-4 whether the session is ended. If the session is not ended, the processing of the receipt of data packets loops back to step 6-2 for repeated monitoring of the packet reception rate of the data packets. If the session does end, the processing of the data packets for the data packet transaction session ends as reflected by step 6-5.

If it is determined at step 6-3 that a channel type switch is to be invoked, a channel type switch occurs at step 6-6. Assuming that the session had previously employed a common channel, at step 6-6 a dedicated channel is allocated to the data packet transaction session. In addition, in connection with the channel type switch the routing of data packets of the session is changed from the common channel (CC) output buffer to the dedicated channel (DC) output buffer for the allocated dedicated channel. Such routing switch of packets is illustrated in Fig. 4 by switch control unit 307 controlling the multiplexer 308 so that the data packets are routed to the dedicated channel (DC) output buffer 312 rather than the common channel (CC) output buffer 310.

In one mode of the invention, once the data packet transaction session has gained a dedicated traffic channel there is no further monitoring of the packet reception rate for the sake of channel type switching. In other words, once a data packet transaction session has obtained a dedicated traffic channel, there is no subsequent relegation to a common traffic channel. Such mode with its permanent retention of dedicated traffic channel assignment is reflected by the solid line shown connecting step 6-6 with step 6-5 of Fig. 6.

In another mode, known as the best efforts mode, the data packet transaction session does not permanently acquire the dedicated traffic channel, and can in fact devolve back to a common traffic channel. This mode wherein the dedicated traffic channel is only temporarily or conditionally assigned to the data packet transaction session is reflected by the broken line shown connecting step 6-6 and step 6-4 in Fig. 6. In this second mode, the packet reception rate of the data packet transaction session is continually monitored. Moreover, if it be subsequently determined that the packet reception rate has somehow decreased, or at step 6-3 that other factors no longer justify the data packet transaction session retaining the dedicated traffic channel, the channel type switch is performed at step 6-6. In connection with performance of the channel type switch at this juncture, the data packet transaction session looses its dedicated traffic channel and is relegated to one of the common traffic channels. In essence, the performance of step 6-6 at this juncture is essentially the opposite of a change from common traffic channel to dedicated traffic channel as described above.

As mentioned above, at step 6-2 of Fig. 6 the packet reception rate analyzer 301 performs the classification of the data packets comprising the session as being fast transmission-ramping protocol (e.g., TCP) packets or not. A first technique of classification capitalizes upon the fact that, in TCP, when a sender has sent a first packet, the sender waits until the sender receives an acknowledgment that the first packet has been received, after which the sender sends two more packets directly after each other (i.e., immediately consecutively without waiting for acknowledgment). Then, for each received acknowledgment, the sender sends two more packets. Such being the case, upon examining the receive times of packets in the radio network controller (RNC) 24 for a TCP/IP session, there will be a pattern in which every second time gap between two packets is "short" while the time gap between other packets is "long".

Steps involved in this first technique of classification are illustrated in Fig. 6A as substeps of step 6-2 of Fig. 6, and particularly as steps 6-2A-1 through 6-2A-6. At substep 6-2A-1, packet reception rate analyzer 301 notes the packet arrival times for a window of recent packets in the session. Then, as depicted by step 6-2A-2, packet reception rate analyzer 301 determines whether there is a sequence of long-short-long-short time gaps or intervals between arrival times of consecutive packets. If the sequence is a long-short-long-short sequence, then (as shown by step 6-2A-3) packet reception rate analyzer 301 recognizes that a TCP slow start phase is in progress and classifies the session as having a fast transmission-ramping protocol. If, on the other hand, packet reception rate analyzer 301 discerns a long-Iong-long-long sequence of gaps or intervals between arrival times of consecutive packets (step 6-2A-4), packet reception rate analyzer 301 classifies the session as not having a fast transmission-ramping protocol (e.g., a linear increase phase). Other sequences with a mix of multiple consecutive shorts or longs indicate congestion in the network (e.g., in a router), as reflected by step 6-2A-5.

Table 1 shows an example of a session which is classifiable using the technique of Fig. 6A as having a fast-transmission-ramping protocol. In Table 1, note particularly the receive time (second column) for the sequence of packets, and the relative length of the time interval between the receive times for consecutive packets. From Table 1 it can be seen that the time interval between the first and second packet (73) is relatively long; the time interval between the second and third packet (4) is relatively short; the time interval between the second and third packet (69) is relatively long; the time interval between the third and fourth packet (4) is relatively short; and so forth, providing a long-short-long-short sequence.

The difference between a "long" time interval and "short" time interval depends on differences in the bandwidth on the two links, i.e., (1) the link from the sender to the RNCBS and (2) the link from the RNC/BS to the mobile station (e.g., the air interface [AIF]). Values for determining "long" and "short" can be calculated for any given situation depending on the bandwidth of the links and the packet size.

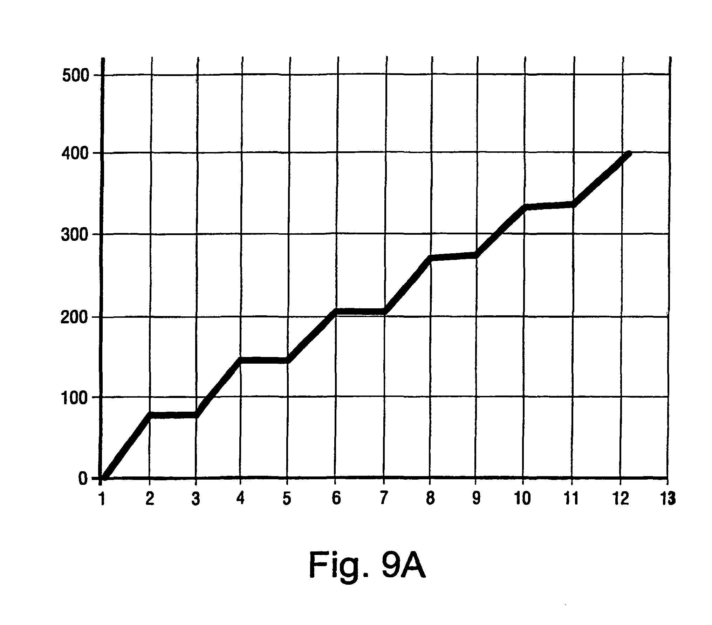

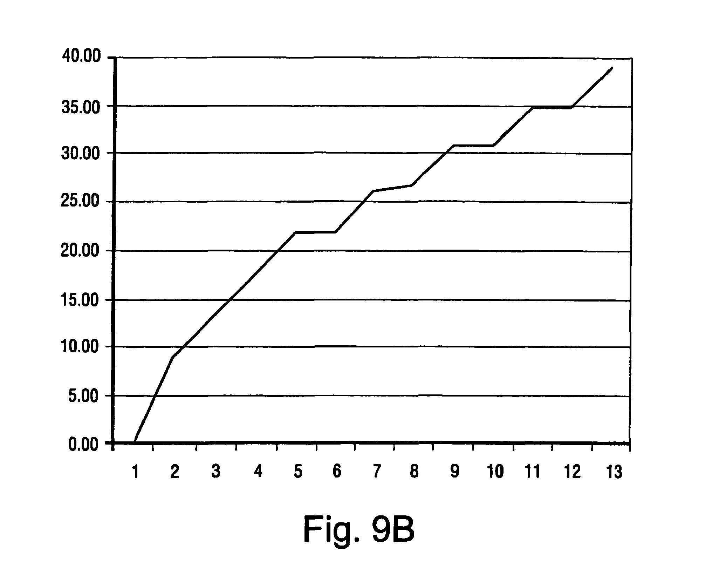

A graph of receipt time verses packet number for the session of Table 1 is shown in Fig. 9A, and particularly illustrates a session for which the sender-RNC/BS link is considerably faster than the RNC/BS-mobile link. In view of such bandwidth differential, the graph line of Fig. 9A appears more or less as having a stair case pattern. Even with such a stair case pattern, the graph line of Fig. 9A still has a higher average derivative than in the linear increase case (e.g., non fast transmission-ramping protocol). But as the bandwidth of the air interface (RNC/BS-mobile link) changes, the curve form of such a graph also changes. For example, if the air interface bandwidth becomes close to that of the network link (i.e., sender-RNCBS link), the sequence number is exponentially increasing over time. Table 2 shows example data for a situation in which the air interface bandwidth is close to that of the network link, and is graphed in Fig. 9B.

A second example technique for the classification step 6-2 of Fig. 6 performed by packet reception rate analyzer 301 is illustrated in Fig. 6B has comprising substeps number as steps 6-2B-1 through 6-2B-4. At substep 6-2B-1, packet reception rate analyzer 301 notes the packet arrival times for a window of recent packets in the session. Then, as depicted by step 6-2B-2, packet reception rate analyzer 301 first detects if the packet throughput reaches a predetermined speed threshold value stored in memory 322. Then, as step 6-2B-3 the packet reception rate analyzer 301 determines data packet arrival acceleration at the predetermined speed threshold. Further, as step 6-2B-4 the packet reception rate analyzer 301 compares the data packet arrival acceleration at the predetermined speed threshold with a predetermined acceleration threshold also stored in memory 322. If the data packet arrival acceleration at the predetermined speed threshold equals or exceeds the predetermined acceleration threshold, then packet reception rate analyzer 301 concludes that the session involves a fast transmission-ramping protocol.

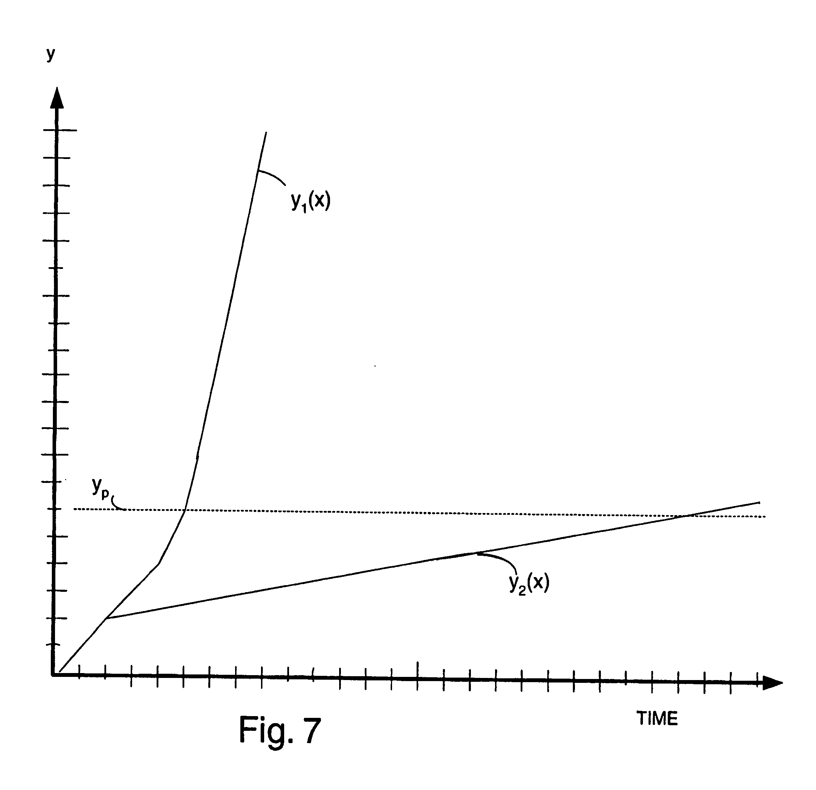

The substeps of Fig. 6B are also illustrated with reference to Fig. 7. In Fig. 7, a congestion avoidance phase of operation is reflected by line y₂(x), while a slow start phase of operation is depicted by line y₁(x). It will be recalled that in the slow start phase the packet transmission rate quickly (e.g., exponentially) increases, while in the congestion avoidance phase the packet transmission rate is much less. In the particular example shown in Fig. 7, step 6-2B-2 involves detecting when the data packet transmission rate reaches a predetermined speed threshold of 25 kbits/second on a 32 kbit/s channel, shown as yₚ in Fig. 7. Step 6-2B-3 involves taking the derivative of the data packet transmission rate at the predetermined speed threshold, e.g., taking the slope (Δy/Δx) of the data packet transmission rate at yₚ. Step 6-2B-4 involves comparing the derivative of the data packet transmission rate at the predetermined speed threshold to a predetermined acceleration threshold.

From Fig. 7 it is evident that (at yₚ) the derivative of line y₁(x) is significantly greater than the derivative of the line y₂(x), i.e., y₁(x)' >> y₂(x)'. In other words, at the predetermined speed threshold the derivative of the slow start phase is considerably greater than the derivative of the congestion avoidance phase. For purposes of delineating a slow start phase from a congestion avoidance phase, the packet reception rate analyzer 301 determines that a slow start phase is in progress when the derivative of the data packet transmission rate at the predetermined speed threshold is above the predetermined acceleration threshold. In an example scenario in which the predetermined speed threshold is 25 kbits/second on a 32 kbit/s channel, the predetermined acceleration threshold can be one packet per 115 msec, for example. In this example scenario, the predetermined acceleration threshold is set in the middle of a certain range, the certain range extending from an estimated average derivative when TCP is in a slow start (e.g., one packet per 83 msec) to a little less than double the estimated average derivative with TCP (e.g., one packet per 150 msec, which is fairly indicative of the linear increase).

The invention encompasses a variety of techniques for classifying the packet reception rate, not just the specific techniques illustrated in Fig. 6A and Fig. 6B. For example, the packet reception rate data may be utilized in conjunction with a curve fitting operation to ascertain whether the obtained data fits with one or more stored patterns of packet reception rates indicative of TCP sessions. Since there are numerous versions of TCP, the packet reception rate analyzer 301 can have available corresponding information for each of plural versions. In this regard, for an alternate embodiment Fig. 4 shows packet reception rate analyzer 301 accessing a threshold library 320 for assessing threshold values (e.g., speed thresholds and acceleration thresholds) for differing versions of TCP. Alternatively, the packet reception rate analyzer 301 may classify the data packet transaction session as being a TCP session if the packet reception rate increases at least exponentially over time. Alternative ways of deducing the TCP nature of the data packets of the session are thus within the scope of the invention, as there are numerous ways to ascertain a TCP packet transmission rate signature.

Thus, the radio network controller (RNC) 24 sets up and switches the channel type as above described. The person skilled in the art will appreciate that the base station (BS) 22 performs a mapping of resources from the traffic channel (whether common or dedicated) to the radio channels involved in the session (e.g., controls the radio transmission and reception). The mapping of resources at the base station (BS) 22 is performed in accordance with conventional techniques. It should be understood, of course, that the user equipment unit 20 must be advised using control channels that the user equipment unit 20 is to switch from one channel type to another (e.g., from common traffic channel to dedicated traffic channel) in furtherance of the present invention.

Thus, in accordance with the present invention, when user equipment unit 20 with its TCP/IP stack 108 is involved in a data packet transaction session in which it is either sending or receiving fast transmission ramping protocol (e.g., TCP) data packets (e.g., with respect to the Internet), there is an opportunity to allocate the session a dedicated traffic channel rather than a common traffic channel. By making the switch of channel type from a common traffic channel to a dedicated traffic channel, the radio network controller (RNC) 24 provides the data packet transaction session a greater opportunity for packet reception (e.g., less likelihood of packet loss), and thereby a continued higher rate of packet throughput for the session. Whereas a common traffic channel has low bit rate and consequentially low throughput, a dedicated traffic channel has a high bit rate (ranging from 32 Kbits/sec to 2 Mbits/sec). Even higher channel rates can be used in a W-CDMA system in which a higher chip rate is utilized.

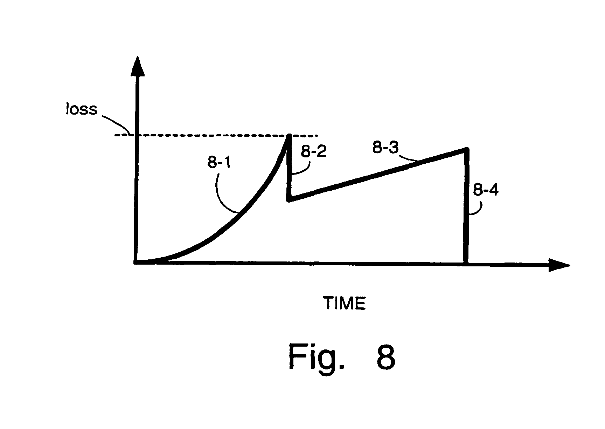

The advantages of the present invention including continued high rate of packet throughput are contrasted to the conventional situation depicted in Fig. 8. The graph of Fig. 8 shows a TCP session which is constrained to a common traffic channel. As shown by line segment 8-1 in Fig. 8, at first the transmission of data packets for the session is allowed to increase quickly in characteristic TCP fashion. However, when the packet transmission rate reaches the point indicated by the broken line (labeled "loss") in Fig. 8, a packet loss is detected. In accordance with conventional techniques, the fact of the packet loss causes a reduction (e.g., halving) in TCP transmission rate as indicated by line segment 8-2 in Fig. 8. Thereafter, as shown by line segment 8-3 in Fig. 8, the TCP packet transmission rate is again increased, but this time at a much slower rate (a linear increase rather than exponential, for example). Such increase continues until another packet loss is encountered, or (as shown by line segment 8-4) the session terminates.

The present invention advantageously deduces a TCP packet session at an early time in the session, corresponding to line segment 8-1 in Fig. 8. Unlike the Fig. 8 scenario, however, the switching of the present invention from a common traffic channel to a dedicated traffic channel enables the session to have a graph more like Fig. 7. The timing of the switching of channel types is thus important so as not to waste resources of the telecommunications system.

Another embodiment of the input/output unit 247' is illustrated in Fig. 4B. In the Fig. 4B embodiment generally resembles the embodiment of Fig. 4A, but is specifically structured to facilitate the changing or switching the data packets from a first rate dedicated traffic channel to a second rate dedicated traffic channel in conjunction with step 6-3. In this regard, the input/onput unit 247' of Fig. 4B accommodates, for the n^{th} session, a switching to or between either a first rate dedicated channel or a second rate dedicated channel. Specifically, switch control unit 307ₙ enables the data packets of the n^{th} session to be applied (via mux 308) to either the common channel output buffer 310ₙ, the first rate dedicated channel output buffer 312ₙ, or the second rate dedicated channel output buffer 313ₙ. Thus, the present invention allows a changing or switching between dedicated channels having differing transmission rates.

In general, if channel type switching does not consider characteristics of TCP, some of the data streams from the core network to user equipment unit 20 may lie on common traffic channels for a long time before any switching to a dedicated traffic channel. If such general scenario is followed, there will be timeouts for the TCP packets, with the result that TCP will think that there is congestion on the link. So when a channel type switch is eventually made, TCP has made the sending window much smaller, with a very low throughput as a result, even though at that point it might have a huge dedicated traffic channel to use. Such a careful congestion-preventing approach thus results in a very poor usage of the dedicated traffic channel. A TCP stream of data that has a half rate, or that is backed to zero, can require minutes to reach 128 Kbits/second, for instance. Such a waste of dedicated traffic channel resources is obviated by the present invention, since the present invention makes the channel type switch decision at an early opportunity by evaluating the packet reception rate at the outset of a session.

Thus, as explained above, the present invention keeps tracks of user streams (streams of data packets in a session) and detects promptly if the stream is the beginning of a TCP session. If the stream is the beginning of a TCP session, if at all possible the session is quickly accorded a dedicated traffic channel so TCP will not have timeouts at the beginning of the session.

The principles of the invention are also applicable for a stream that has reached a bit rate which is about to reach the maximum capacity of its presently accorded traffic channel (e.g., 32 Kbits/sec). For such a stream, the invention makes a quick determination whether the stream should be provided with a greater bitrate. The timing of the determination is important, less packets be lost if the determination is delayed. If packets are lost, the later provision for increase in bitrate will not soon be capitalized upon, as explained above.

The invention is not limited to any particular protocol or even the use of a protocol, since the acceleration-dependent analysis performed by packet reception rate analyzer 301 can be used to detect packet reception acceleration generally and utilized to determine when it is a good time to perform a channel switch or channel type switch. Moreover, irrespective of particular protocol, the invention can be utilized to determine when changing bitrate on a dedicated channel justifies a channel switch (e.g., to a common channel or to another rate dedicated channel [illustrated at least partially in connection with Fig. 4B]).

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

**TABLE 1**

| Packet number | Receive time | Sent on AIF at | Occupies AIF to | |
|---|---|---|---|---|
| 1 | 0 | 0 | 63 | |
| 2 | 73 | 73 | 136 | |
| 3 | 77 | 136 | 199 | |
| 4 | 146 | 199 | 262 | |
| 5 | 150 | 262 | 325 | |
| 6 | 209 | 325 | 388 | |
| 7 | 213 | 388 | 451 | |
| 8 | 272 | 451 | 514 | |
| 9 | 276 | 514 | 577 | |
| 10 | 335 | 577 | 640 | |
| 11 | 339 | 640 | 703 | |
| 12 | 398 | 703 | 766 | |
| 13 | 402 | 766 | 829 | |

| Fwd delay S->R (ms) | Rev delay S | Fwd delay R | Rev delay R | Round trip (ms) |
|---|---|---|---|---|
| 4 | 1 | 63 | 5 | 73 |

| TCP pkt size (byte) | S->R bandwith | R->M bandwith | | |
|---|---|---|---|---|
| 512 | 1 Mbit | 64 kbit | | |

**TABLE 2**

| Packet number | Receive time | Sent on AIF at | Occupies AIF to | |
|---|---|---|---|---|
| 1.00 | 0.00 | 0.00 | 4.14 | |
| 2.00 | 8.88 | 8.88 | 13.01 | |
| 3.00 | 12.97 | 13.01 | 17.15 | |
| 4.00 | 17.75 | 17.75 | 21.89 | |
| 5.00 | 21.85 | 21.89 | 26.03 | |
| 6.00 | 21.89 | 26.03 | 30.17 | |
| 7.00 | 25.99 | 30.17 | 34.30 | |
| 8.00 | 26.63 | 34.30 | 38.44 | |
| 9.00 | 30.73 | 38.44 | 42.58 | |
| 10.00 | 30.77 | 42.58 | 46.71 | |
| 11.00 | 34.86 | 46.71 | 50.85 | |
| 12.00 | 34.90 | 50.85 | 54.99 | |
| 13.00 | 39.00 | 54.99 | 59.13 | |

| Fwd delay S->R (ms) | Rev delay S->R (ms) | Fwd delay R->M (ms) | Rev delay R->M (ms) | Round trip (ms) |
|---|---|---|---|---|
| 4.10 | 0.32 | 4.14 | 0.32 | 8.88 |

| TCP pkt size (byte) | S->R bandwith Mbit | R->M bandwith Mbit | | |
|---|---|---|---|---|
| | | | | |

## Claims

1. A mobile telecommunications system (18) comprising at least one node (24) through which a packet switched data session is established between a user equipment unit (20) and a data network (32), the mobile telecommunications system being **characterized by** the at least one node comprising processing means for making a determination if an acceleration of packet transmission rate justifies a channel switch for the session or whether a packet transmission rate of the session is indicative of a fast transmission-ramping protocol, and a channel switch controller for implementing a channel switch in accordance with the determination.

2. The system of claim 1, wherein the node switches channel types for the session in accordance with the determination.

3. The system of claim 2, wherein the node switches the session from a common traffic channel to a dedicated traffic channel in accordance with the determination.

4. The system of claim 1, wherein the node switches the session from a dedicated traffic channel having a first transmission rate to a dedicated traffic channel having a second transmission rate in accordance with the determination.

5. The system of claim 1, wherein the node makes the determination at a beginning of the session.

6. The system of claim 1, wherein the node makes the determination when throughput of the packets reaches a packet speed threshold.

7. The system of claim 6, wherein the node makes the determination by comparing a derivative of the packet transmission rate at the packet speed threshold with a predetermined acceleration threshold.

8. The system of claim 1, wherein the node makes the determination upon detection of a predetermined pattern of interval time lengths between receipt times of packets.

9. The system of claim 8, wherein the predetermined pattern of interval time lengths between receipt times of packets is long-short-long-short justifies a channel switch for the session.

10. The system of claim 1, wherein the node (1) makes a determination whether the session is in a slow start phase, and (2) switches channel for the session in accordance with whether the session is in a slow start phase.

11. The system of claim 1, wherein the node (1) makes a determination whether a packet transmission rate of the session is indicative of a fast transmission-ramping protocol, and (2) switches channel for the session in accordance with the determination.

12. The system of claim 11, wherein fast transmission-ramping protocol is transmission control protocol (TCP).

13. The system of claim 1, wherein the node is a radio network controller node.

14. The system of claim 1, wherein the mobile telecommunications system uses wideband code division multiple access.

15. A method of operating a mobile telecommunications system (18) comprising at least one node (24) through which a packet switched data session is established between a user equipment unit (20) and a data network (32), the method comprising:
(1) making a determination whether an acceleration in packet transmission rate justifies a channel switch for the session or whether a packet transmission rate of the session is indicative of a fast transmission-ramping protocol; and
(2) switching channels for the session in accordance with the determination.

16. The method of claim 15, wherein step (2) involves switching channel types for the session in accordance with the determination.

17. The method of claim 16, further comprising switching the session from a common traffic channel to a dedicated traffic channel in accordance with the determination.

18. The method of claim 15, further comprising switching the session from a dedicated traffic channel having a first transmission rate to a dedicated traffic channel having a second transmission rate in accordance with the determination.

19. The method of claim 15, further comprising making the determination at a beginning of the session.

20. The method of claim 15, further comprising making the determination when throughput of the packets reaches a packet speed threshold.

21. The method of claim 20, further comprising making the determination by comparing a derivative of the packet transmission rate at the packet speed threshold with a predetermined acceleration threshold.

22. The method of claim 15, further comprising making the determination upon detection of a predetermined pattern of interval time lengths between receipt times of packets.

23. The method of claim 15, further comprising making the determination upon detection of a predetermined pattern of interval time lengths between receipt times of packets, and wherein the predetermined pattern of interval time lengths between receipt times of packets is long-short-long-short justifies a channel switch for the session.

24. The method of claim 15, wherein step (1) involves making a determination whether the session is in a slow start phase, and step (2) involves switching channels for the session in accordance with whether the session is in a slow start phase.

25. The method of claim 15, wherein the determination is made by a node of the network, and wherein the node is a radio network controller node.

26. The method of claim 15, wherein step (1) involves determining whether a packet transmission rate of the session is indicative of a fast transmission-ramping protocol.

27. The method of claim 26, wherein fast transmission-ramping protocol is transmission control protocol (TCP).

## Patentansprüche

1. Mobiltelekommunikationssystem (18), umfassend wenigstens einen Knoten (24), durch den eine paketvermittelte Datensession zwischen einer Benutzergeräteeinheit (20) und einem Datennetz (32) hergestellt wird, wobei das Mobiltelekommunikationssystem **dadurch gekennzeichnet ist, dass** der wenigstens eine Knoten eine Verarbeitungseinrichtung zum Treffen einer Feststellung, ob eine Beschleunigung einer Paketübertragungsrate eine Kanalumschaltung für die Session rechtfertigt oder ob eine Paketübertragungsrate der Session auf ein Schnellübertragungs-Rampenprotokoll hinweist, und einen Kanalumschaltungs-Steuerung zum Implementieren einer Kanalumschaltung in Übereinstimmung mit der Feststellung umfasst.

2. System nach Anspruch 1, wobei der Knoten Kanaltypen für die Session in Übereinstimmung mit der Feststellung umschaltet.

3. System nach Anspruch 2, wobei der Knoten die Session von einem gemeinsamen Verkehrskanal auf einen speziell vorgesehenen Verkehrskanal in Übereinstimmung mit der Feststellung umschaltet.

4. System nach Anspruch 1, wobei der Knoten die Session von einem speziell vorgesehenen Verkehrskanal mit einer ersten Übertragungsrate auf einen speziell vorgesehenen Verkehrskanal mit einer zweiten Übertragungsrate in Übereinstimmung mit der Feststellung umschaltet.

5. System nach Anspruch 1, wobei der Knoten die Feststellung zu Beginn der Session trifft.

6. System nach Anspruch 1, wobei der Knoten die Feststellung trifft, wenn ein Durchsatz der Pakete eine Paketgeschwindigkeitsschwelle erreicht.

7. System nach Anspruch 6, wobei der Knoten die Feststellung durch Vergleichen einer Ableitung der Paketübertragungsrate bei der Paketgeschwindigkeitsschwelle mit einer vorgegebenen Beschleunigungsschwelle trifft.

8. System nach Anspruch 1, wobei der Knoten die Feststellung auf eine Erfassung eines vorgegebenen Musters von Intervallzeitlängen zwischen Empfangszeiten von Paketen hin trifft.

9. System nach Anspruch 8, wobei das vorgegebene Muster von Intervallzeitlängen zwischen Empfangszeiten von Paketen lang-kurz-lang-kurz ist, eine Kanalumschaltung für die Session rechtfertigt.

10. System nach Anspruch 1, wobei der Knoten (1) eine Feststellung trifft, ob die Session in einer Langsamstartphase ist, und (2) einen Kanal für die Session in Übereinstimmung damit, ob die Session in einer Langsamstartphase ist, umschaltet.

11. System nach Anspruch 1, wobei der Knoten (1) eine Feststellung trifft, ob eine Paketübertragungsrate der Session auf ein Schnellübertragungs-Rampenprotokoll hinweist und (2) einen Kanal für die Session in Übereinstimmung mit der Feststellung umschaltet.

12. System nach Anspruch 11, wobei der Knoten das Schnellübertragungs-Rampenprotokoll ein Übertragungssteuerprotokoll (TCP) ist.

13. System nach Anspruch 1, wobei der Knoten ein Funknetzsteuerungsknoten ist.

14. System nach Anspruch 1, wobei das Mobiltelekommunikationssystem einen Wideband Code Division Multiple Access verwendet.

15. Verfahren zum Betreiben eines Mobiltelekommunikationssystems (18), umfassend wenigstens einen Knoten (24), durch den eine paketvermittelte Datensession zwischen einer Benutzergeräteeinheit (20) und einem Datennetz (32) hergestellt wird, wobei das Verfahren umfasst:
(1) Treffen einer Feststellung, ob eine Beschleunigung in der Paketübertragungsrate eine Kanalumschaltung für die Session rechtfertigt oder ob eine Paketübertragungsrate der Session auf ein Schnellübertragungs-Rampenprotokoll hinweist; und
(2) Umschalten von Kanälen für die Session in Übereinstimmung mit der Feststellung.

16. Verfahren nach Anspruch 15, wobei der Schritt (2) das Umschalten von Kanaltypen für die Session in Übereinstimmung mit der Feststellung beinhaltet.

17. Verfahren nach Anspruch 16, ferner umfassend das Umschalten der Session von einem gemeinsamen Verkehrskanal auf einen speziell vorgesehenen Verkehrskanal in Übereinstimmung mit der Feststellung.

18. Verfahren nach Anspruch 15, ferner umfassend das Umschalten der Session von einem speziell vorgesehenen Verkehrskanal mit einer ersten Übertragungsrate auf einen speziell vorgesehenen Verkehrskanal mit einer zweiten Übertragungsrate in Übereinstimmung mit der Feststellung.

19. Verfahren nach Anspruch 15, ferner umfassend das Treffen der Feststellung an einem Beginn der Session.

20. Verfahren nach Anspruch 15, ferner umfassend das Treffen der Feststellung, wenn ein Durchsatz der Pakete eine Paketgeschwindigkeitsschwelle erreicht.

21. Verfahren nach Anspruch 20, ferner umfassend ein Treffen der Feststellung durch Vergleichen einer Ableitung der Paketübertragungsrate bei der Paketgeschwindigkeitsschwelle mit einer vorgegebenen Beschleunigungsschwelle.

22. Verfahren nach Anspruch 15, ferner umfassend ein Treffen der Feststellung auf eine Erfassung eines vorgegebenen Musters von Intervallzeitlängen zwischen Empfangszeiten von Paketen.

23. Verfahren nach Anspruch 15, ferner umfassend ein Treffen der Feststellung auf eine Erfassung eines vorgegebenen Musters von Intervallzeitlängen zwischen Empfangszeiten von Paketen hin, und wobei das vorgegebene Muster von Intervallzeitlängen zwischen Empfangszeiten von Paketen lang-kurz-lang-kurz eine Kanalumschaltung für die Session rechtfertigt.

24. Verfahren nach Anspruch 15, wobei der Schritt (1) ein Treffen einer Feststellung beinhaltet, ob die Session in einer Langsamstartphase ist und Schritt (2) ein Umschalten von Kanälen für die Session in Übereinstimmung damit, ob die Session in einer Langsamstartphase ist, beinhaltet.

25. Verfahren nach Anspruch 15, wobei die Feststellung durch einen Knoten des Netzes durchgeführt, und wobei der Knoten ein Funknetzsteuerungsknoten ist.

26. Verfahren nach Anspruch 15, wobei der Schritt (1) eine Feststellung beinhaltet, ob eine Paketübertragungsrate der Session auf ein Schnellübertragungs-Rampenprotokoll hinweist.

27. Verfahren nach Anspruch 26, wobei das Schnellübertragungs-Rampenprotokoll ein Übertragungssteuerprotokoll (TCP) ist.

## Revendications

1. Système de télécommunication mobile (18) qui comprend au moins un noeud (24) par l'intermédiaire duquel une session de données commutées par paquets est établie entre une unité d'équipement d'utilisateur (20) et un réseau de données (32), le système de télécommunication mobile étant **caractérisé en ce que** l'au moins un noeud comprend un moyen de traitement pour réaliser une détermination de si une accélération de vitesse de transmission de paquets justifie une commutation de canal pour la session ou de si oui ou non une vitesse de transmission de paquets de la session est indicative d'un protocole en rampe de transmission rapide, et par un contrôleur de commutation de canal pour mettre en oeuvre une commutation de canal conformément à la détermination.

2. Système selon la revendication 1, dans lequel le noeud commute des types de canal pour la session conformément à la détermination.

3. Système selon la revendication 2, dans lequel le noeud commute la session depuis un canal de trafic commun sur un canal de trafic dédié conformément à la détermination.

4. Système selon la revendication 1, dans lequel le noeud commute la session depuis un canal de trafic dédié présentant une première vitesse de transmission sur un canal de trafic dédié présentant une seconde vitesse de transmission conformément à la détermination.

5. Système selon la revendication 1, dans lequel le noeud réalise la détermination au début de la session.

6. Système selon la revendication 1, dans lequel le noeud réalise la détermination lorsque le débit de paquets atteint un seuil de vitesse de paquets.

7. Système selon la revendication 6, dans lequel le noeud réalise la détermination en comparant une dérivée de la vitesse de transmission de paquets au seuil de vitesse de paquets à un seuil d'accélération prédéterminé.

8. Système selon la revendication 1, dans lequel le noeud réalise la détermination suite à la détection d'un motif prédéterminé de longueurs temporelles d'intervalles entre des temps de réception de paquets.

9. Système selon la revendication 8, dans lequel le motif prédéterminé de longueurs temporelles d'intervalles entre des temps de réception de paquets est long-court-long-court et justifie une commutation de canal pour la session.

10. Système selon la revendication 1, dans lequel le noeud (1) réalise une détermination de si oui ou non la session est dans une phase de début lente et (2) commute un canal pour la session conformément à si oui ou non la session est dans une phase de début lente.

11. Système selon la revendication 1, dans lequel le noeud (1) réalise une détermination de si oui ou non une vitesse de transmission de paquets de la session est indicative d'un protocole en rampe de transmission rapide et (2) commute un canal pour la session conformément à la détermination.

12. Système selon la revendication 11, dans lequel un protocole en rampe de transmission rapide est un protocole de commande de transmission (TCP).

13. Système selon la revendication 1, dans lequel le noeud est un noeud de contrôleur de réseau radio.

14. Système selon la revendication 1, dans lequel le système de télécommunication mobile utilise un accès multiple par division de code large bande.

15. Procédé de fonctionnement d'un système de télécommunication mobile (18) comprenant au moins un noeud (24) par l'intermédiaire duquel une session de données commutées par paquets est établie entre une unité d'équipement d'utilisateur (20) et un réseau de données (32), le procédé comprenant:
(1) la réalisation d'une détermination de si oui ou non une accélération au niveau d'une vitesse de transmission de paquets justifie une commutation de canal pour la session ou de si oui ou non une vitesse de transmission de paquets de la session est indicative d'un protocole en rampe de transmission rapide; et
(2) la commutation des canaux pour la session conformément à la détermination.

16. Procédé selon la revendication 15, dans lequel l'étape (2) met en jeu la commutation de types de canal pour la session conformément à la détermination.

17. Procédé selon la revendication 16, comprenant en outre la commutation de la session depuis un canal de trafic commun sur un canal de trafic dédié conformément à la détermination.

18. Procédé selon la revendication 15, comprenant la commutation de la session depuis un canal de trafic dédié présentant une première vitesse de transmission sur un canal de trafic dédié présentant une seconde vitesse de transmission conformément à la détermination.

19. Procédé selon la revendication 15, comprenant en outre la réalisation de la détermination à un commencement de la session.

20. Procédé selon la revendication 15, comprenant en outre la réalisation de la détermination lorsqu'un débit des paquets atteint un seuil de vitesse de paquets.

21. Procédé selon la revendication 20, comprenant en outre la réalisation de la détermination en comparant une dérivée de la vitesse de transmission de paquets au seuil de vitesse de paquets à un seuil d'accélération prédéterminé.

22. Procédé selon la revendication 15, comprenant en outre la réalisation de la détermination suite à la détection d'un motif prédéterminé de longueurs temporelles d'intervalles entre des temps de réception de paquets.

23. Procédé selon la revendication 15, comprenant en outre la réalisation de la détermination suite à la détection d'un motif prédéterminé de longueurs temporelles d'intervalles entre des temps de réception de paquets et dans lequel le motif prédéterminé de longueurs temporelles d'intervalles entre des temps de réception de paquets est long-court-long-court et justifie une commutation de canal pour la session.

24. Procédé selon la revendication 15, dans lequel l'étape (1) met enjeu la réalisation d'une détermination de si oui ou non la session est une phase de début lente et l'étape (2) met en jeu la commutation de canaux pour la session conformément à si oui ou non la session est selon une phase de début lente.

25. Procédé selon la revendication 15, dans lequel la détermination est réalisée au moyen d'un noeud du réseau et dans lequel le noeud est un noeud de contrôleur de réseau radio.

26. Procédé selon la revendication 15, dans lequel l'étape (1) met en jeu la détermination de si oui ou non une vitesse de transmission de paquets de la session est indicative d'un protocole en rampe de transmission rapide.

27. Procédé selon la revendication 26, dans lequel un protocole en rampe de transmission rapide est un protocole de commande de transmission (TCP).
